# EUROPEAN PATENT SPECIFICATION

(11) **EP 2 964 586 B1**
(45) Date of publication and mention of the grant of the patent: **12.10.2016**
(21) Application number: 14702589.4
(22) Date of filing: 04.02.2014
(51) Int. Cl.: C04B 24/26, C08F 220/28, C04B 103/40

(54) **USE OF POLYCARBOXYLATE ETHERS WITH BRANCHED SIDE CHAINS AS DISPERSANTS FOR INORGANIC BINDERS**
VERWENDUNG VON POLYCARBOXYLATETHERN MIT VERZWEIGTEN SEITENKETTEN ALS DISPERGIERMITTEL FÜR ANORGANISCHE BINDEMITTEL
UTILISATION DE POLYCARBOXYLATÉTHERS À CHAÎNES LATÉRALES RAMIFIÉES COMME DISPERSANTS POUR LIANTS INORGANIQUES

(30) Priority: 06.03.2013 EP 13158019
(43) Date of publication of application: 13.01.2016
(73) Proprietor: Construction Research & Technology GmbH, 83308 Trostberg (DE)
(72) Inventor: DENGLER, Joachim, 83342 Tacherting (DE); KRAUS, Alexander, 83132 Pittenhart (DE); AL-HELLANI, Rabie, 67059 Ludwigshafen (DE); MUELLER- CRISTADORO, Anna, 65529 Waldems (DE); FLAKUS - TAUBE, Silke, 85560 Ebersberg (DE); ZEMINIAN, Nicoletta, I-31100 Treviso (IT); ROS, Ida, I-31059 Zero Branco TV Italy (IT)
(74) Representative: BASF IP Association
(86) International application number: PCT/EP2014/052085
(87) International publication number: WO 2014/135318

(56) References cited:
- EP-A1- 2 090 553
- EP-A2- 1 707 542
- US-A1- 2011 015 361

## Description

The present invention concerns the use of a copolymer for dispersing inorganic binders, the copolymer comprising as comonomers in copolymerized form:
(A) at least one ethylenically unsaturated acid monomer,
(B) at least one ethylenically unsaturated, branched polyether macromonomer of the general formula E-VₖLₖ₊₁, where
   - E: is an ethylenically unsaturated structural unit which comprises at least one ether, carboxylic ester or carboxamide structural unit,
   - V: is a branched structural unit of the formula -CH(CH₂O-)₂, and
   - L: is a linear structural unit of the formula -[A¹O]ₗ-A², where
   - A¹: in each case independently is selected from C₂-C₁₀ alkylene, C₆-C₁₀ arylene and/or C₇₋C₁₀ aralkylene, preferably -C₂H₄-,
   - A²: in each case independently is selected from C₁-C₃₀ alkyl, C₃₋C₁₀ cycloalkyl,
   - C₆-C₃o: aryl and/or C₇-C₃₀ aralkyl, preferably C₁-C₄ alkyl,
   - k: is an integer from 1 to 7, preferably from 1 to 3, and
   - I: in each case independently is an integer from 1 to 350, preferably from 2 to 100, more particularly from 5 to 70 and very preferably from 7 to 17.

It is known that aqueous slurries of organic or inorganic substances in powder form, such as clays, ground silicate, chalk, carbon black, ground rock and hydraulic binders are often admixed with admixtures in the form of dispersants for the purpose of improving their processing properties, i.e. kneadability, spreadability, sprayability, pumpability or fluidity. Such admixtures are capable of disrupting agglomerated solids, dispersing the particles formed, and in this way improving the fluidity. This affect is also exploited in particular, in a targeted way, in the production of building material mixtures which comprise hydraulic binders, such as cement, lime, gypsum, calcium sulphate hemihydrate (bassanite) or anhydrous calcium sulphate (anhydrite), or latent hydraulic binders such as fly ash, blast furnace slag or pozzolans.

To convert these building material mixtures, based on the stated binders, into a ready-to-use processable form, there is generally a need for a substantially greater amount of batching water than would be necessary for the subsequent hydration and hardening process. The cavity fraction in the concrete element, formed by the excess water that later evaporates, leads to significantly impaired mechanical strengths and resistance properties.

To reduce this excess water fraction for a given processing consistency, and/or to improve the processing properties for a given water/binder ratio, admixtures are used that are generally identified as water reducers or superplasticizers. Employed more particularly as such admixtures in practice are copolymers prepared by radical copolymerization of acid monomers with polyether macromonomers. Concrete plasticizers are added to the concrete alongside other additives in order either to facilitate processing at a constant water/cement value or to obtain plastic viscosity in the case of reduced water/cement values. By this means it is possible, for example, to improve the concrete's pumpability or to raise the compressive strength and density and to shorten the cure time. Currently in use as concrete plasticizers are lignosulphonates, sulphonated melamine-formaldehyde resins and naphthalene-formaldehyde resins, and also polycarboxylates. Examples of polycarboxylates are, for example, copolymers of maleic acid and/or acrylic acid with polyether macromonomers (e.g. alkoxylated vinyl ethers or (meth)acrylate esters of alkylpolyalkylene glycols).

Dispersants based on polycarboxylate ethers (PCEs) can be adapted individually to the requirements of the concrete industry. This is done by modifying the chemical composition of the copolymers. PCEs generally have a main polymer chain of carbon atoms and side chains which comprise polyether structures. Located on the main polymer chain are acid groups. It is possible to modify the side chain length and the molar ratios of the acid groups and polyether side chains in order to obtain concrete of a very high quality.

For concrete for precast component works, superplasticizers are required that allow a very high plasticizing effect, rapid setting, good early strength, and low viscosity in the cement produced using them. High plasticizing effect combined with good early strengths are presently available, however, only from superplasticizers having relatively long (greater than 3000 g/mol) polyether side chains, as described for example in WO/05075529 A2. Usually, however, this causes the fresh concrete to have a decidedly high viscosity. As a result of this, the fresh concrete, especially in the case of low W/C values, is very difficult to place and is difficult to shape. Consequently, in the precast component works, the moulds can only be reliably filled at high cost and complexity.

Pumpable concrete and ready-mixed concrete require a relatively wide time window within which the concrete possesses the same consistency and processing properties. Here, the mixing times tend to play a minor part, while the slump retention (retention of consistency) is very important here. Since the pump pressure correlates with the viscosity (Buckingham-Reiner equation), and in order to minimize the mechanical abrasion and cost and complexity of instrumentation, the viscosity ought to be extremely low for a long time even in the case of pumpable concrete. As mentioned above for the precast component concrete, high viscosities in the fresh concrete are very deleterious to processing properties.

For the stated applications, however, there are presently no acceptable solutions that combine sufficient dispersability with, in particular, low concrete viscosities.

A concrete admixture that supplies relatively low viscosity on the part of the concrete is OPTIMA^{®} 100 from Chryso, for example. This dispersant, which is based not on a polycarboxylate technology (phosphonated polyether, corresponding to WO 2010/112775 A1), is restricted in its use, however, since particularly at low W/C values it often does not display adequate plasticizing. The said product also often has retarding properties and is generally not so suitable for concrete for precast components.

The market presently requires dispersants which allow a high dispersing effect, a low concrete viscosity, and the effective development of early strength in the concrete. Disclosed in the prior art (US2011/0015361 A1) are copolymers which have in copolymerized form at least one ethylenically unsaturated monocarboxylic or dicarboxylic acid and at least one structural unit of the general formula I. The general formula I exhibits partial overlap with the branched polyether macromonomers (B) used in this invention. However, US2011/0015361 A1 gives no indication at all of the use as water reducers in inorganic binders or concrete, instead disclosing applications as thickeners in the sectors of laundry detergents and cleaners (textile segment) and also in the cosmetic sector.

EP 2 090 553 A1 discloses a continuous process for producing a copolymer comprising an acid monomer and a polyether macromonomer. The polyether macromonomer of D2 is different in its chemical structure compared to the polyether macromonomers of this patent application, in particular the branched unit E-VₖLₖ₊₁ is not disclosed in D2.

It is an object of the present patent application to use dispersants for dispersing inorganic binders, more particularly to use dispersants in cementitious systems such as concrete and mortar, which allows a sufficient dispersing effect, and more particularly, a low viscosity on the part of the concrete of the concrete.

The object is achieved through the use of a copolymer for dispersing inorganic binders, the copolymer comprising as comonomers in copolymerized form:
(A) at least one ethylenically unsaturated acid monomer,
(B) at least one ethylenically unsaturated, branched polyether macromonomer of the general formula E-VₖLₖ₊₁, the parameters E, V, ₖ, and L being defined as specified above.

Preference is given to the use characterized in that the inorganic binder is selected from cements, from cements, more particularly portland cements and aluminate cements, from α-calcium sulphate hemihydrate, β-calcium sulphate hemihydrate, anhydrite and lime, from industrial and synthetic slags, more particularly blast furnace slags, slag sand, ground slag sand, electrothermal phosphorus slag and stainless steel slag, from pozzolanic binders, more particularly fly ashes, preferably brown coal fly ash and mineral coal fly ash, microsilica, metakaolin, natural pozzolans, more particularly tuff, trass and volcanic ash, natural and synthetic zeolites, calcined oil shale and mixtures of these. A preferred binder is (portland) cement. The superplasticizers are metered preferably at from 0.1 to 1 wt%, based on the inorganic binder or binders, preferably 0.2 to 0.6 wt%.

As far as the dispersing mechanisms of the polycarboxylate ethers is concerned, the conceptualization assumes that the anionically charged acid groups of the polycarboxylate ethers attached to the surfaces of the cement grain, that as a result of calcium ions have a positive charge. The hydrophilic polyether side chains point predominantly away from the cement grain, into the likewise hydrophilic aqueous pore solution of the cementitious binder batched with water.
In contrast to linear polyether side chains of the prior art, the dispersants used in the present invention comprise at least singly or else multiply branched polyether side chains. For the same mass, the polyether macromonomers (B) are certainly greater in their steric bulk. More particularly they differ in their length (for the same mass), with the polyether macromonomers (B) being shorter on account of the branching. Surprisingly it has been found that these structural differences lead to a reduction in the viscosity of fresh concrete. This has the advantage that a relatively high plasticizing effect and in particular a low viscosity (better processing/pumping properties) can be obtained.
In the case of conventional PCEs with unbranched, more particularly long, polyether side chains, the inventors, in the course of their work, arrived at the hypothesis that an interaction ("hooking") of the long linear polyether side chains into one another could be seen as a reason for the high viscosity of the resultant concrete. As a result of this interaction there are also interactions between polyether side chains attached on different cement grains, thus explaining the higher viscosity of the concrete. The inorganic binder particles, preferably cement particles, are less well dispersed. As the length of the side chain goes up, this effect increases, and the interactions (presumably mediated via the PCEs) between the dispersed cement grain particles become stronger, a phenomenon manifested macrophysically in an increase in the viscosity of the concrete.

In the text below, the dispersants used in the present invention, constructed from acid monomers (A) and polyether macromonomers (B), will be described in more detail.

### Acid monomer (A)

Possible examples of (A) ethylenically unsaturated acid monomer include carboxylic acid monomers, especially monocarboxylic or dicarboxylic acid monomers, sulphonic acid monomers, phosphonic acid monomers and/or phosphoric ester monomers. Among the phosphoric ester monomers, the phosphoric monoester monomers are preferred, and it is also possible to utilize phosphoric diester monomers. Preferred are carboxylic acid monomers and phosphoric ester monomers; sulphonic acid monomers are less preferred. The stated acid monomers may be used both in their (partially) neutralized form (by alkalis such as alkali metal- or alkaline earth metal-based alkalis, ammonia, organic amines, etc., for example), and in their acidic form. Independently of one another it is possible for one or more kinds of ethylenically unsaturated acid monomers to be employed. The acid monomer (A) is preferably monoethylenically unsaturated.

Examples of suitable monoethylenically unsaturated dicarboxylic acids are itaconic acid, citraconic acid, mesaconic acid, glutaconic acid, aconitic acid, maleic acid, fumaric acid, maleic anhydride, itaconic anhydride and mixtures of two or more of the aforementioned compounds, including the respective salts. Particularly preferred is maleic acid, which can also be used in the anhydride form.

Suitable monoethylenically unsaturated monomer carboxylic acids are (meth)acrylic acid, ethacrylic acid, and (E)- and (Z)-crotonic acid. Preferred is (meth)acrylic acid; acrylic acid is especially preferred.

Also preferred is the use of one or more monoethylenically unsaturated monocarboxylic acids and one or more monoethylenically unsaturated dicarboxylic acids; the use of maleic acid and acrylic acid is especially preferred.

Preference is given to the use characterized in that the at least one copolymerized ethylenically unsaturated acid monomer (A) is present in the copolymer in the form of one of the following structural units (Ia) to (Id): 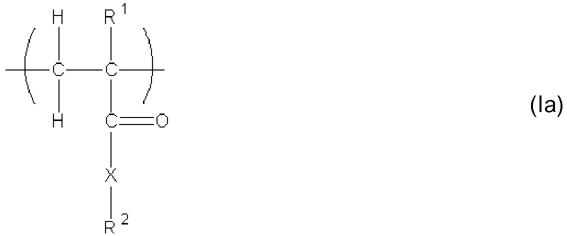 where
- R¹: in each case independently is selected from H, an unbranched and/or branched C₁-C₄ alkyl group,
- X: in each case independently is selected from a single bond, -NH-(CₘH₂ₘ)- and/or -O-(CₘH₂ₘ)-, where m is an integer from 1 to 4,
- R²: in each case independently is selected from -OM_{1/}q, -SO₃M_{1/q}, -PO₃M_{2/q}, -O-PO₃M_{2/q}, -C₆H₄-SO₃M_{1/q}, -C₆H₄-PO₃M_{2/q} and/or -C₆H₄-OPO₃M_{2/q}, where M is selected from H, alkali metals, alkaline earth metals, aluminium and/or metals of the first transition series, and q represents the charge number of M, with the proviso that R² is represented by -OM_{1/q} if X is a single bond; 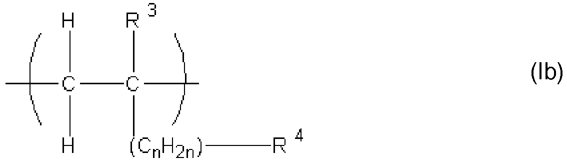
where
- R³: has the meaning given above for R¹,
- n: is an integer from 0 to 4,
- R⁴: in each case independently is selected from -SO₃M_{1/q}, -PO₃M_{2/q}, -O-PO₃M_{2/q} and/or -C₆H₄-SO₃M_{1/q}, where M and q have the meanings stated above; 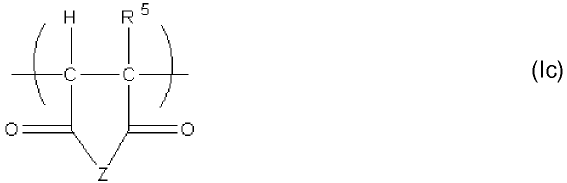
where
- R⁵: has the meaning given above for R¹,
- Z: in each case independently is selected from -O- and/or -NH-; 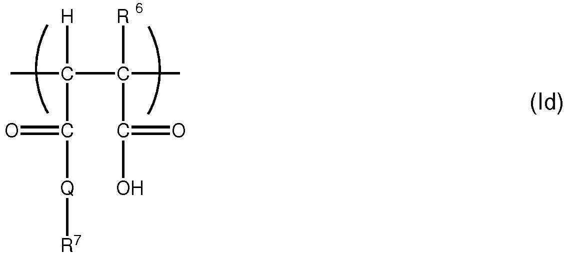
where
- R⁶: has the meaning given above for R¹,
- Q: has the meaning given above for X and,
- R⁷: has the meaning given above for R².

Preference is given to the use characterized in that in the formula (la)
- R¹: is H or methyl,
- X: in each case independently is selected from -NH-(CₘH₂ₘ)- and -O-(CₘH₂ₘ)- and preferably is -O-(C₂H₄)- or -NH-(C(CH₃)₂CH₂)-, and
- R²: is -O-PO₃M_{2/q} or -O-SO₃M_{1/q},
where m, M and q have the meanings given above.

Preference as radical R² in the formula (Ia) is additionally given to -O-PO₃M_{2/q}, and as X -O-(CₘH₂ₘ). Particularly preferred as phosphorous-containing acid monomers (A) are hydroxyethyl (meth)acrylic phosphoric ester (HE(M)A-phosphate) and hydroxypropyl (meth)acrylic phosphoric ester (HP(M)A-phosphate) and in each case their salts. The corresponding diphosphoric esters may likewise be used, but are less preferred. Preference is given to the use characterized in that the acid monomer (A) or the acid monomers (A) is or are selected from (meth)acrylic acid and salts thereof, maleic acid, its monoesters, monoamides and salts, maleic anhydride and/or hydroxyalkyl (meth)acrylic phosphoric esters and salts thereof, with preference being given to hydroxyethyl (meth)acrylic phosphoric ester and hydroxypropyl (meth)acrylic phosphoric ester and in each case their salts.

### Polyether macronomomer (B)

The copolymers comprise as comonomer in copolymerized form at least one ethylenically unsaturated, branched polyether macromonomer (B) of the general formula (I) E-VₖLₖ₊₁. In the copolymer it is possible to employ independently of one another identical or different polyether macromonomers (B). (B) in the general formula (I) comprises an ethylenically unsaturated, preferably a monoethylenically unsaturated, structural unit (E), which comprises at least one ether, carboxylic ester or carboxamide structural unit. The ether and carboxylic ester structural units preferably comprise exclusively oxygen atoms, in contrast to, for example, sulphur-containing embodiments such as sulphur ethers. The structural unit E preferably comprises two to six carbon atoms and at least one oxygen atom, more preferably two to five carbon atoms and at least one oxygen atom.

Examples of E which comprise ethers are CH₂=CH-O-, CH₂=CH-O-(CH₂)₄-O-, CH(CH₃)=CH-O-, CH₂=CH-O-[A³O]ₘ-, where -A³ in each case independently is selected from C₂-C₁₀ alkylene, C₆-C₁₀ arylene and/or C₇-C₁₀ aralkylene; preferably A³ is -C₂H₄-; ₘ is in each case independently an integer from 1 to 50, preferably from 2 to 40, especially preferably from 5 to 25. It is particularly preferred for A³ in each case independently of one another to be present at more than 60 mol%, based on all of the structural units of the formula -[A³O]ₘ in the form of -C₂H₄-. The aforementioned ethers are vinyl ethers, since an oxygen atom is located directly on the unsaturated structural unit. Vinyl ethers are preferred since they are relatively reactive and easy to prepare.

Further examples E which comprise ethers include the (meth)allyl ethers (CH₂=CH-CH₂-O-, or CH₂=C(Me)-CH₂-O-), and the isoprenol ethers (CH₂=CMe-(CH₂)₂-O-).

Among the ethylenically unsaturated carboxylic esters there is a preferred distinction between monocarboxylic acid derivatives and dicarboxylic acid derivatives. Examples of monoethylenic unsaturated structural units E from the area of the monocarboxylic acid derivatives are (meth)acrylic esters such as CH₂=CH-COO-, CH₂=CMe-COO-, CH₂=CH-COO-[A³O]ₘ-, CH₂=CMe-COO-[A³O]ₘ-, and the corresponding esters of (E)- and (Z)-crotonic acid such as CH(Me)=CH-COO-, CH(Me)=CH-COO-[A³O]ₘ-. A³ and m, including the preferred ranges, are defined as stated above.

Examples of monoethylenically unsaturated structural units E from the area of the dicarboxylic acid derivatives are monoesters of maleic acid (HOOCH=CH(COO)-), the corresponding esters of fumaric acid and of itaconic acid (CH₂=C-C(COOH)(CH₂-COO).

Examples of structural units E which comprise carboxamide structural units include (meth)acrylamides such as CH₂=CH-CO-N(R)-, CH₂=CMe-CON(R)- and maleic monoamide (HOOCH=CH-CO-N(R))-, where R in each case independently of one another is selected from H, C₁-C₃₀ alkyl, C₆-C₃o aryl and/or C₇₋C₃₀ aralkyl, R preferably being H or C₁-C₄ alkyl; more particularly preferred from C₁-C₄ alkyl is methyl.

Preference is given to the use of copolymers characterized in that the structural unit E in each case independently is selected from a vinyl ether, allyl ether, isoprenyl ether, (meth)acrylic ester, (meth)acrylamide, maleic monoester and/or maleic monoamide unit. Especially preferred are vinyl ether, (meth)acrylic ester and/or (meth)acrylamide units.

Preference is given to the inventive use characterized in that the copolymer comprises as additional comonomer in copolymerized form an unbranched polyether macromonomer of the general formula E-L, where E and L have the meanings given above. In the unbranched polyether macromonomer E-L, L is preferably a linear structural unit of the formula -[A¹O]ₗ-A², where A¹ in each case independently is selected from C₂-C₁₀ alkylene, C₆-C₁₀ arylene and/or C₇-C₁₀ aralkylene, preferably -C₂H₄-, A² in each case independently is selected from C₁-C₃₀ alkyl, C₃-C₁₀ cycloalkyl, C₆-C₃o aryl and/or C₇-C₃₀ aralkyl, preferably C₁-C₄ alkyl, and I in each case independently is an integer from 7 to 30, preferably from 12 to 25, especially preferably from 15 to 20.

The preferred range for the side chain length, defined via the parameter I, has the advantage that the moderately long side chains (preferably from 7 to 30) are able to make an important contribution to the dispersibility, while still not increasing the application viscosity, more particularly the viscosity in the concrete, as a result of excessive length.

Preference is given to the use of copolymers, characterized in that the ethylenically unsaturated structural unit E is present in the form of E*-S, where E* in each case independently is selected from a vinyl ether, allyl ether, (meth)acrylic ester and/or maleic monoester unit and S is a (poly)alkylene glycol unit -[A³O]ₘ-, where A³ in each case independently is selected from C₂-C₁₀ alkylene, C₆-C₁₀ arylene and/or C₇-C₁₀ aralkylene, A³ preferably being -C₂H₄-, and
ₘ is in each case independently an integer from 1 to 50, preferably from 1 to 40, especially preferably from 1 to 25. It is particularly preferred for A³ in each case independently of one another to be present to an extent of more than 60 mol%, based on all of the structural units of the formula -[A³O]ₘ in the form of -C₂H₄-.
If E is present in the form of E*-S, there is preferably at least one alkylene oxide unit present as a "spacer" (abbreviated S) between E* and the relatively sterically bulky, branched structural unit VₖLₖ+₁. This leads to a higher reactivity in the synthesis of the polyether macromonomer (B) (etherification or esterification, as will be shown below), and increases the yield of (B). In the case of amines, the reactivity with respect to (meth)acrylic acid, (meth)acrylic anhydride, (meth)acryloyl chloride or maleic anhydride is higher in any case, since carboxamides are formed. Accordingly, a spacer does not bring such great reactivity advantages.

In the general formula (I), V is a branched structural unit -CH(CH₂O-)₂. V is a relatively hydrophilic polyether structural unit and therefore contributes to the water solubility of (B). For illustration it will be mentioned again that the actual branching site is the tertiary carbon atom, which is substituted by one H atom and two (CH₂O-). The polyether macromonomer (B) undergoes branching, in line with the general formula (I) E-VₖLₖ₊₁, starting from the unsaturated structural unit E by way of the branched structural unit Vₖ. The index k here indicates the number of structural units V and hence of branching sites. In the hypotheoretical case (not in accordance with the invention) of k being 0 there would be a single, unbranched side chain of the prior art (E-L). In the case where k is 1, two polyether side chains are introduced; in the case where k is 2 three polyether side chains are introduced; and so on.

V in the synthesis of the polyether macromonomer (B) originates from glycerol derivatives, more preferably from epichlorohydrin, whose reactivity is the greatest among the glycerol derivatives.

L is a linear structural unit of the formula -[A¹O]ₗ-A², the parameters A¹, A² and l meeting the definition stated above. The index I denotes the number of repeating alkylene oxide units and, like A¹ and A², may be the same or different independently of one another in a polyether macromonomer (B); that is, I may adopt different values within the same polyether macromonomer, and A¹ and A² may be the same or different.
L comprises linear, unbranched (poly)(cyclo)alkyl, (poly)aryl and/or (poly)aralkyl structural units, preferably (poly)alkylene structural units. The structural units L cap the polyether macromonomer. The number of branching structural units V and L is linked via the parameter k. The simple rule here is that the number of linear structural units L is greater by 1 and the number of branching structural units V. L represents a hydrophilic and readily water-soluble structural unit if A¹ is C₂H₄-. For this reason, A¹ is preferably C₂H₄-.
In the synthesis of the polyether macromonomer (B), L originates from monoalcohols of the formula HO-[A¹O]ₗ-A².

### Synthesis of the polyether macromonomers (B)

The polyether macromonomers (B) are synthesized in an at least two-stage operation. A distinction is made between the process stage (I) of reacting a linear monoalcohol to form a branched monoalcohol, and the process stage (II) which comprises the reaction of the resulting branched monoalcohol to give the ethylenically unsaturated polyether macromonomer (B) (etherification or esterification with suitable ethylenically unsaturated reagents).

In certain intermediate stages, the branched monoalcohol may also be transformed, optionally, into an amine, in which case subsequently, in the process stage (II), during the reaction with suitable ethylenically unsaturated carboxylic acids or carboxylic acid derivatives, carboxamides are formed.

Likewise optionally, the branched monoalcohol of the general structural formula (II) may be alkoxylated, thus giving a polyether monoalcohol of the formula HO-[A³O]ₘ-VₖLₖ₊₁ with a so-called spacer. In the (B) polyether macromonomer, E is then present in the form of E*-S. All of the parameters E*, A³, m, V, k and L have the definitions stated above.

### Process stage (I)

Process stage (I) constitutes the reaction of a linear monoalcohol of the formula HO-[A¹O]ₗ-A² with a glycerol derivative, such as glycidol, glycerol carbonate or epichlorohydrin, preferably epichlorohydrin. The product is a branched polyether monoalcohol of the general formula (II)

(II) HO-VₖLₖ₊₁,

where the parameters V, k, L, A¹, I and A² are defined as stated above. It is possible to use the same or different alcohols of the formula HO-[A¹O]ₗ-A².

Said reaction takes place at best in the presence of bases, especially if epichlorohydrin is being used. The reactions can be carried out in the presence of a catalyst. Examples of suitable catalysts include organic and inorganic bases. Where epichlorhydrin is used as the reactive glycerol derivative, the base serves not only as a catalyst but also to neutralize the resultant hydrochloric acid. Examples of suitable inorganic bases include alkali metal carbonates and, in particular alkali metal hydroxides such as NaOH and KOH. Examples of suitable organic bases include tertiary amines, more particularly triethylamine and [2.2.2]diazabicyclooctane (DABCO), and also pyridine and para-N,N-dimethylaminopyridine.

The reaction of glycerol derivatives, such as glycidol or glycerol carbonate, preferably epichlorohydrin, can be carried out in a solvent. Examples of suitable solvents include ethers, especially 1,4-dioxane, diisopropyl ether, tetrahydrofuran ("THF") and di-n-butyl ether. Other suitable solvents are n-butylacetate ("butyl acetate"), DMSO, N,N-dimethylformamide ("DMF") and N-methylpyrrolidone, and aromatic solvents such as toluene, for example.

When water is eliminated during the reaction of the linear monoalcohol of the formula HO-[A¹O]ₗ-A² with a glycerol derivative (e.g. glycerol), it is possible to employ a water-removing agent, as for example a molecular sieve, sodium sulphate or magnesium sulphate, or the water formed may be removed by azeotropic distillation.

These reactions are described in detail in US2011/0015361 A1. Through targeted control of the temperature and of the quantities of monomer, it is possible to obtain different branched polyether macromonomers, typically in the form of mixtures. Since the reactivity goes down as the number of k (chain length) goes up, it is advantageous to raise the temperature in steps. At relatively low reaction temperatures it is particularly advantageous to react only part of the epichlorohydrin with the monoalcohol of the formula (II), then to add further epichlorohydrin and to continue the reaction at elevated temperature. This sequence, described in US2011/0015361 A1, of substeps (adding epichlorohydrin, raising the temperature, and chemically reacting) can be repeated a number of times.

Generally speaking, these reactions furnish mixtures of monoalcohols of the general formula (II), with different values of k, but also with different kinds of constitutions for the same k. Set out below are a number of examples of possible structures.

For the simplest case of k as 1, for example, the following singly branched monoalcohol (IIa) is obtained from the reaction of two equivalents of linear monoalcohol of the formula HO-[A¹O]ₗ-A² with one equivalent of epichlorohydrin:

(IIa) HO-CH[CH₂O-[A¹O]ₗ₋A¹]2.

One equivalent of (IIa) may undergo further reaction with one equivalent of epichlorohydrin and one equivalent of monoalcohols of formula HO-[A¹O]ₗ-A² to react, for example, the following asymmetric product (IIb) (k = 2):

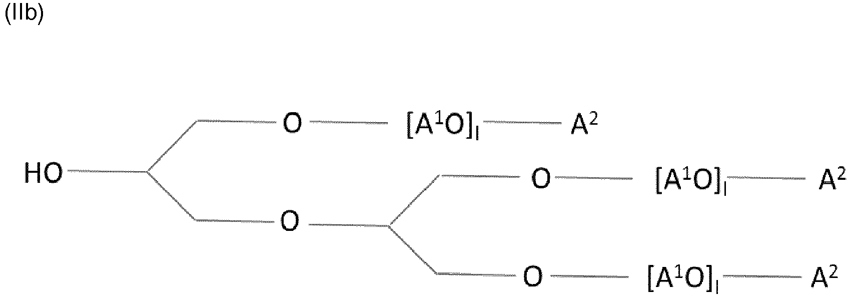

Two equivalents of (IIa) may undergo further reaction, for example, with one equivalent of epichlorohydrin to give the following symmetrical monoalcohol (IIc) (k = 3):

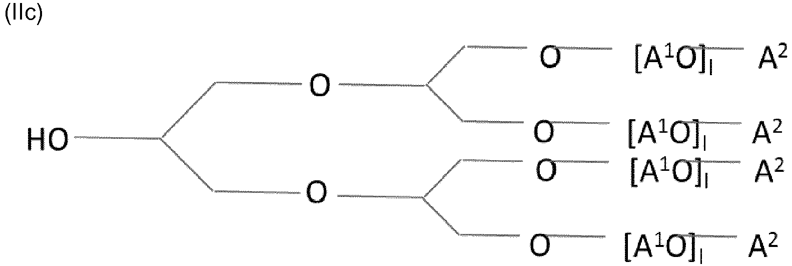

The structures (IIb) and (IIc) are constitutional isomers.

One equivalent of (IIb) may undergo further reaction, for example, with one equivalent of epichlorohydrin and one equivalent of monoalcohol of the formula HO-[A¹O]ₗ-A² to give the following asymmetric monoalcohol (IId) (k = 3):

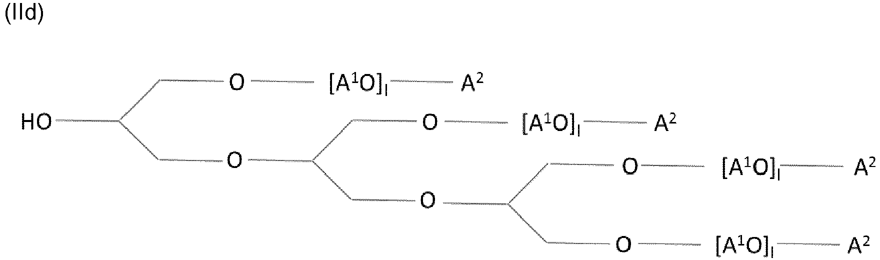

One equivalent of (IIc) may undergo further reaction, for example, with one equivalent of epichlorohydrin and one equivalent of monoalcohol of the formula HO-[A¹O]ₗ-A² to give the following asymmetric monoalcohol (IIe) (k = 4):

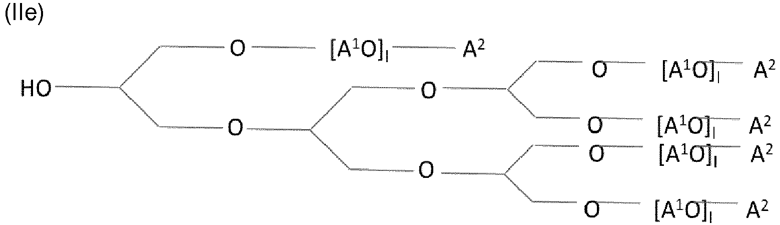

Preferred as polyether macromonomer (B) is a structural unit E-VₖLₖ₊₁ characterized in that VₖLₖ₊₁ conforms to one of the formulae (IIa), (IIb), (IIc) and/or (IId), with the proviso that in the formulae (IIa), (IIb), (IIc) and (IId) in each case the OH group is replaced by a single bond. E, V and L here have the meanings stated above, and k is an integer from 1 to 3.

Optional conversion of the branched monoalcohols (II) to monoamines As mentioned above, the branched monoalcohol of the general formula (II) HO-VₖLₖ₊₁ may also be transformed by a number of intermediate stages into a branched monoamine of the formula NH(R)-VₖLₖ₊₁ (replacement of the OH group by an amino group NH(R)). For this purpose first of all in general there is an oxidation on the secondary alcohol function to give a ketone. This is followed by amination with an amine NH₂R, with elimination of water, to give the corresponding imine. The reduction of the imine with the hydrogen, for example, in the presence of catalysts (e.g. nickel or the like) leads to the corresponding branched monoamine. The monoamines have the structural formula NH(R)-VₖLₖ₊₁, where R has the meanings stated above.

### Process stage (II)

In the second process stage (II) the branched monoalcohol II (e.g. the structures IIa, IIb, IIc, IId, IIe) may be modified by the introduction of an ethylenically unsaturated structural unit (E) to give the polyether macromonomer (B), as for example through the reaction with acetylene to give a vinyl ether. The reaction with (meth)allyl halides, preferably (meth) allyl chloride, leads for example to corresponding (meth) allyl ethers. With (meth)acrylic acid, (meth)acrylic anhydride or (meth)acryloyl halides, the corresponding (meth)acrylic esters are obtained. The ethylenically unsaturated structural unit may also be introduced by reaction with maleic anhydride, in which case the corresponding maleic monoester is obtained.

In an analogous way, from the branched monoamines NH(R)-VₖLₖ₊₁, through reaction with (meth)acrylic acid, (meth)acrylic anhydride or (meth)acryloyl halides, the corresponding carboxamides are obtained, or, in the case of maleic anhydride, the maleic monoamide.

The respective esterification, amidation and etherification reactions are well known in the prior art and are preferably carried out under dehydrating conditions.
For the reaction with acetylene, it is possible to employ one or more catalysts, preferably selected from basic catalysts. Particularly suitable is KOH.
The reaction with acetylene can be carried out with or without solvent. Examples of suitable solvents include N-methylpyrrolidone, N-ethylpyrrolidone, toluene, xylene, THF and dioxane. The reaction with acetylene can be carried out, for example, at temperatures in the range from 80 to 160°C, preferred temperatures being around 120°C, as for example 110 to 130°C. The acetylation can be carried out under atmospheric pressure or, preferably at elevated pressure, as for example at 2 to 30 bar.

The inventive use is preferably characterized in that A¹ in each case independently is present to an extent of more than 60 mol%, more preferably to an extent of more than 80 mol%, based on all of the structural units of the formula -[A¹O]ₗ, in the form of -C₂H₄-, A² in each case independently is selected from C₁-C₄ alkyl, k is an integer from 1 to 3 and I in each case independently is an integer from 2 to 100.

The polyether macromonomers (B) thus selected have the advantage that on account of the polyalkylene oxide component they are highly water-soluble and exhibit a good dispersing effect.

The inventive use is preferably characterized in that the branched polyether macromonomer (B) has a molecular weight in the range from 700 to 15 000 g/mol, preferably from 1500 to 10 000 g/mol and more preferably from 3000 to 8000 g/mol. An advantage is that an acceptable dispersing effect and low viscosities in the application can be obtained.

The inventive use is preferably characterized in that the molar ratio of (A) acid monomer to (B) polyether macromonomer is from 20/1 to 1/1, preferably 15/1 to 1.5/1 and more preferably from 10/1 to 3/1. Especially in the case of relatively high molecular weights of the polyether macromonomer (B), relatively high fractions of acid monomers (A) are advantageously, in order to compensate the high mass of polyether macromonomer (B) by the presence of a greater number of anionic so-called anchor groups, which are able to interact with the cement surface, more particularly with calcium ions. Particular preference is given to a polyether macromonomer (B) molecular weight in the range from 3000 to 8000 g/mol and a molar ratio of (A) acid monomer to (B) polyether macromonomer of 13/1 to 3/1, especially preferably of 10/1 to 5/1.

The inventive use is preferably characterized in that the copolymer is obtainable by radical polymerization in the presence of the ethylenically unsaturated acid monomer (A) and of the ethylenically unsaturated polyether macromonomer (B), so that in total at least 45 mol%, preferably at least 80 mol%, of all of the structural units of the copolymer have been produced by copolymerization of acid monomer (A) and polyether macromonomer (B).
It is also possible for further ethylenically unsaturated monomers (C) to be copolymerized as well. Suitable comonomers are ethylenically unsaturated compounds which can be copolymerized radically with the comonomers (A) and (B). Examples include the following: C₁-C₁₀ alkyl esters of ethylenically unsaturated monocarboxylic or dicarboxylic acids, more particularly of (meth)acrylic acid, vinyl acetate, vinylaromatics such as, in particular, styrene and α-methylstyrene, α-olefins such as, in particular C₁₂-C₂₀ α-olefins, additionally vinyl chloride, acryloylnitrile and N-vinylpyrrolidone. Preferred examples of C₁-C₁₀ alkyl esters of ethylenically unsaturated monocarboxylic acids are methyl (meth)acrylate, ethyl (meth)acrylate, n-butyl (meth)acrylate and 2-ethyl hexyl (meth)acrylate. Preferred in particular are C₁-C₁₀ alkyl esters of ethylenically unsaturated monocarboxylic or dicarboxylic acids, more particularly of acrylic acid.

Besides the copolymers used in the present invention, the dispersant may also comprise other formulating ingredients such as rheological assistants (e.g. cellulose ethers or starch ethers) and/or redispersible polymer powders, defoamers, air entrainers and so on. It is also possible to use other polycarboxylate ethers in formulations, or other superplasticizers such as lignosulphonates or melamine sulphonates.
The invention also concerns building material mixtures comprising inorganic binders, preferably cement, and a dispersant for inorganic binders, comprising the used in claim 1.

The inorganic binder or the inorganic binders here is or are preferably selected from cements, more particularly portland cements and aluminate cements, from α-calcium sulphate hemihydrate, β-calcium sulphate hemihydrate, anhydrite and lime, from slags, more particularly blast furnace slag, slag sand, ground slag sand, electrothermal phosphorous slag and stainless steel slag, from pozzolanic binders, more particularly fly ashes, preferably brown coal fly ash and mineral coal fly ash, microsilica, metakaolin, natural pozzolans, more particularly tuff, trass and volcanic ash, natural and synthetic zeolites, calcined oil shale, and mixtures of these.
It is possible to dry the dispersants of the invention by conventional drying methods such as spray drying, for example, and to incorporate the resultant, largely water-free products into inorganic binders. The dry mortars obtained in this way can be used on the construction site itself by being batch-mixed with water (without addition of superplasticizers). The amount of the dispersant of the invention that is added is typically in the range of from 0.1 to 1 wt%, based on the inorganic binder or binders, preferably 0.2 to 0.6 wt%. The dry mortars often include rheological assistants such as cellulose ethers and/or redispersible polymer powders, defoamers, air entrainers and so on.

### Examples:

### 1. General experimental procedure for preparing branched polyether monoalcohols of the general structural formula (II) (HO-VₖLₖ₊₁):

A 2-litre flask with dropping funnel, magnetic stirrer and reflux condenser was charged with a solution of the corresponding methylpolyethylene glycol (see Table 1) in 1177 ml of dioxane. With stirring, 40 g of KOH pellets are added. This initial charge is heated to 105°C and the required amount of epichlorhydrin (corresponding to Table 1), in solution in dioxane, is added over a period of customarily 30 minutes. The reaction solution is subsequently stirred at 105°C for 17 hours and then cooled to room temperature. The potassium chloride formed is removed by filtration, and the solvent is removed under reduced pressure at 35 mbar. Ten different types of branched polyether monoalcohols of the general structural formula (II) (HO-VₖLₖ₊₁) were obtained, and they were either reacted directly to give polyether macromonomers (B) of the general structural formula (I) (E-VₖLₖ₊₁) or, as in the case of sample 10, were alkoxylated with 10 equivalents of ethylene oxide (spacer), or, as in the case of sample 4, were transformed into an amine derivative (general formula NH(R)-VₖLₖ₊₁) with replacement of the hydroxyl group by an NH₂ group.

In this case the amination was carried out as follows (amination for macromonomer 4): To carry out the amination, 1 mol of the branched monoalcohol and a catalyst (25 g) were placed into an autoclave vessel. The catalyst contains Ni, Co, Cu, Al₂O₃ and Sn on graphite (US 2011/0137030).
The autoclave was flushed with nitrogen in order to prevent oxidation of catalyst. 42.6 g of ammonia were likewise placed into the autoclave, and the desired hydrogen partial
pressure of 40 bar at room temperature was set. The reaction was initiated by heating, and the start of the reaction was specified as the attainment of a temperature of 214°C. Thereafter the reaction product was allowed to stand with stirring at 210°C for a further 10 hours. The discharge from the experiment was freed from traces of the catalyst by means of a pressure filtration. This gave 28 g of the branched amine 4.

Reaction with ethylene oxide (spacer-modified alcohol for macromonomer 10): The branched monoalcohol (1 eq.) and potassium methoxide (1 eq.) are weighed out and agitated on a rotary evaporator at a pressure of about 20 mbar for 120 minutes at 90°C, and the methanol formed in this reaction is taken off.
This reaction solution is transferred to the reactor, which has been dried beforehand, and the reactor is closed and inertized with nitrogen to 5 bar three times. The batch is subsequently heated to 120°C with stirring and a preliminary nitrogen pressure of 3.5 bar is set. Then 0.1 equivalent of ethylene oxide is metered in under mass control over the course of 20 minutes. Following onset of the reaction, a further 9.9 equivalents of ethylene oxide are metered in under mass control over the course of 420 minutes. After the end of metering, the batch is stirred at 120°C for a further 420 minutes. The batch is cooled to 80°C and flushing takes place with nitrogen (about 0.5 m³/h) into the off-gas line for 30 minutes, and the clear, yellowish product is drained from the reactor. The yield is quantitative.

### 2. General experimental procedure for the preparation of polyether macromonomers (B) of the general structural formula (I) (E-VₖLₖ₊₁):

### 2.1 Vinylation to the vinyl alcohol by reaction of the branched polyether monoalcohols with acetylene

A 2.5 I autoclave was charged with 1 mol of the branched polyether monoalcohol and 10 g of KOH, and this initial charge was inertized with nitrogen (2 bar) and thereafter heated to 120°C. Acetylene was then injected with a pressure of 20 bar and the reaction mixture was stirred at 120°C and 20 bar until a total of 26 g of acetylene had been taken up. Thereafter it was cooled to room temperature and let down and the residue, after heating at 60°C for 3 hours with stirring, was degassed and then removed from the autoclave. The conversion is quantitative. A comparison may be made in particular with sample 5 from Table 1.

### 2.2 Reaction with methacryloyl chloride to the methacrylic ester:

0.01 mol of the respective branched macroalcohol from Table 1 (product of the respective methylpolyethylene glycol and epichlorohydrin) is melted in a roundbottomed flask at 80°C. Slowly, 0.04 mol of triethylamine and 600 ppm of p-methoxyphenol are added. Then 0.03 mol of triethylamine is added dropwise and the mixture is stirred at 80°C for 6 hours.
After cooling, the solid material is dissolved in 50 ml of THF and the precipitate is isolated by filtration. Then 30 ml of 0.1 N HCl solution are added and the aqueous phase is removed.
The organic phase is freed from the solvent. This gives the macromonomer with a selectivity of 97% (determined by HPLC and NMR).

### 2.3 Reaction with methylacrylic anhydride to the methacrylic ester:

0.1 mol of the respective branched alcohol from Table 1 (product of the respective methyl polyethylene glycol and epichlorohydrin) is melted at 90°C in a flask. Following addition of 0.1 mol of Na₂CO₃ and 0.0013 mol of butylated hydroxytoluene, 0.27 mol of methacrylic anhydride is added dropwise. The mixture is stirred for 4 hours. Then 300 ml of water are added and stirring takes place at 60°C for 1 hour. The solution is adjusted with H₃PO₃ to a pH of 6. Excessive methacrylic acid is extracted by shaking with water or removed by filtration over basic aluminium oxide. This gives the desired macromonomer in selectivities of more than 96% (HPLC and NMR).

**Table 1: Data of the polyether macromonomers (B)**

| Polyether macromonomer (B) (No.) | 1a | 1b | 2 | 3 | 6 | 7 | 8 | 9 | 10 ¹⁾ | 4²⁾ | 5 |
|---|---|---|---|---|---|---|---|---|---|---|---|
| Side chain length (g/mol) of the methylpolyethylene glycols used (= HO-L) and amount in mol | 750 g/mol [0.667 mol] | 750 g/mol [0.667 mol] | 2000 g/mol [0.667 mol] | 750 g/mol [0.455 mol] + 2000 g/mol [0.455 mol] | 2000 g/mol [0.247] | 350 g/mol [1.429 mol] | 350 g/mol [0.455 mol] + 705 g/mol [0.455 mol] | 350 g/mol [1.429 mol] | 750 g/mol [0.667 mol] | 750 g/mol [0.667 mol] | 350 g/mol [1.429 mol] |
| Epichlorohydrin | 0.583 mol | 0.583 mol | 0.583 mol | 0.796 | 0.216 mol | 1.072 mol | 0.796 mol | 1.250 mol | 0.583 mol | 0.583 mol | 1.250 mol |
| Molecular weight (determined by GPC) | 1844 g/mol | 1844 g/mol | 4057 g/mol | 4481 g/mol | 6550 g/mol | 1611 g/mol | 1636 g/mol | 1612 g/mol | 2284 g/mol | 1844 g/mol | 1864 |
| Polymerizable group E | Methacrylic ester | | | | | | | | Methacrylamide | Vinyl ether | |

| | | | | | | | | | | | |
|---|---|---|---|---|---|---|---|---|---|---|---|
| ¹⁾ After the reaction of the methylpolyethylene glycol with epichlorohydrin, the branched monoalcohol was alkoxylated with 10 equivalents of ethylene oxide. ²⁾ After the reaction of the methylpolyethylene glycol with epichlorohydrin, the branched monoalcohol was hydroaminated. 1a and 2 -10: ester prepared from methacrylic anhydride 1b: ester prepared from methacryloyl chloride | | | | | | | | | | | |

Polymerization of the polyether macromonomers (B) with methacrylic acid (acid monomer A): A Büchi double-wall glass reactor is charged with 47 g of water and this initial charge is heated to 60°C with nitrogen blanketing. Over a period of 4 hours, a solution of 0.01 mol of the corresponding macromonomer and the corresponding amount of methacrylic acid is then added dropwise (Table 2). The initiator (sodium persulphate) is metered in over the course of 4.5 hours as a 7% aqueous solution with 3 mol%, based on the amount of polymerizable double bonds (amount of macromonomer + amount of methacrylic acid). Following after polymerization for an hour, the polymer solution is cooled and neutralized to a pH of 6.5 with aqueous sodium hydroxide solution. The polymer solution is diluted to give a solids content of 30%.

Polymerization of the polyether macromonomers (B) with acrylic acid (acid monomer A):
A glass reactor equipped with stirrer, pH electrode and a number of feed facilities is charged with 40 g of deionized water and 0.1 mol of the corresponding macromonomer and this initial charge is brought to a polymerization start temperature of 15°C. Subsequently, in a separate feed vessel, the required amount of acrylic acid (see Table 1) is mixed with 16 g of water (solution A). In parallel with this, a 6% strength solution of Brüggolit®E 01 is prepared (solution B). With stirring and cooling, first 0.24 g of 3-mercaptopropionoic acid, 0.012 g of Fe₂(SO₄)₃ and 0.64 g of a 30% strength aqueous H₂O₂ solution are added. At the same time as this, the addition of solutions A and B is commenced. Solution A is added with a metering rate of 24 ml/h, solution B is added at a rate of 15.2 ml/h until the solution is peroxide-free. The polymer solution obtained is then adjusted to a pH of 6.5 with 50% strength aqueous sodium hydroxide solution. The polymer solution is diluted with water until it has a solids content of 30%. The results of the copolymerizations are summarized in Table 2.

**Table 2: Copolymers of (A) and (B)**

| Copolymer | Macromonomer (B) | (B) (mol) / (A) (mol) (type* of (A)) | M_{w} [g/mol] |
|---|---|---|---|
| 1 | 1a | 1/5 (MAS) | 21 000 |
| 2 | 2 | 1/7 (MAS) | 27 000 |
| 3 | 3 | 1/7 (MAS) | 25 000 |
| 5 | 5 | 1/8 (AS) | 33 000 |
| 6 | 6 | 1/7 (MAS) | 25 000 |
| 7 | 7 | 1/5 (MAS) | 29 000 |
| 8 | 8 | 1/5 (MAS) | 18 000 |
| 9 | 9 | 1/5 (MAS) | 18 000 |
| 10 | 10 | 1/5 (MAS) | 18 000 |
| 11 | 1a | 1/1/5 (HEMA/MAS) | 21 000 |
| 12 | 1b | 1/12 (MAS) | 23 000 |
| 13 | 1b | 1/20 (MAS) | 17 000 |
| 14 | 1b | 1/12 (MAS) | 20 000 |
| 15 | 1b | 1/12 (MAS) | 45 000 |
| 16 | 1b | 1/12 (MAS) | 24000 |

| | | | |
|---|---|---|---|
| *Abbreviations for type of acid monomer (A): AS: Acrylic acid MAS: Methacrylic acid HEMA: Hydroxyethyl methacrylate | | | |

### Mortar tests

The mortar tests were carried out in accordance with the DIN EN 1015-3 standard. The cement used here was a Karlstadt cement from Schwenk. In the experiments, a sand/cement ratio of 2.2 was used. In this case a mixture of 70% standard sand (Normensand GmbH, Beckum) and 30% quartz sand was used. The water/cement ratio was set always at 0.43. The addition of the superplasticizer is indicated in wt% of solid, based on the cement.

**Table 3: Mortar results with Karlstadt cement**

| | | Slump spread [cm] | | |
|---|---|---|---|---|
| Copolymer | Level of addition | 0 min | 10 min | 30 min |
| Glenium® ACE 440* | 0.17 | 24.2 | 25.9 | 25.6 |
| 1 | 0.23 | 23.4 | 21.6 | 19 |
| 2 | 0.18 | 23.5 | 23.3 | 21.7 |
| 3 | 0.22 | 24.5 | 23.1 | 21.3 |
| 5 | 0.21 | 23.7 | 22.1 | 19.2 |
| 6 | 0.18 | 23.5 | 23.3 | 21.7 |
| 7 | 0.4 | 23.8 | 24.2 | 21.8 |
| 8 | 0.21 | 23.6 | 25.2 | 25 |
| 9 | 0.32 | 23.9 | 24.1 | 22.7 |
| 10 | 0.33 | 23.8 | 23.3 | 23.2 |
| 11 | 0.33 | 23.7 | 24.1 | 23.8 |
| 12 | 0.25 | 25 | 23.3 | 20.4 |
| 13 | 0.3 | 24.5 | 24.8 | 23.8 |
| 14 | 0.3 | 24 | 25.2 | 23.9 |
| 15 | 0.32 | 24.4 | 24.1 | 22.7 |
| 16 | 0.25 | 25 | 23.3 | 20.4 |

| | | | | |
|---|---|---|---|---|
| *Glenium ACE 440 is, for comparison, a polycarboxylate ether with the monomers acrylic acid, maleic acid and ethoxylated hydroxybutyl vinyl ether (linear side chain). It is available from BASF Construction Chemicals Italia Spa. | | | | |

The level of addition of the superplasticizer in Table 3 is indicated in wt% of solid, based on the cement.
On the basis of these results it is clear that the amount of water required to plasticize a mortar to a particular slump spread is drastically reduced by the addition of these polymers. If the superplasticizer is not added, a water/cement ratio (w/c) of 0.55 is needed in order to obtain a slump spread of 23-25 cm.

The superplasticizers with side chain branching, as compared with linear side chains (comparative experiment with Glenium® ACE 440), require a higher acrylic acid fraction in order to achieve a similar plasticization.

Further mortar tests with Monselice cement were carried out with a cone as described in DIN EN 1015-3. The results are the flows indicated in Table 4.
The materials and mortar formula used were as follows:
cement: Monselice CEM I 52.5 R
w/c = 0.42-0.44
s/c = 3 (standard sand (Normensand GmbH, Beckum))
All of the polymers were used as 20% strength solutions, formulated with defoamer (4 wt% tributyl phosphate, based on the solids of the copolymer).

**Table 4: Mortar results with Monselice cement**

| Copolymer No. | w/c | % by wt. of solid copolymer based on cement | Flow [cm] | |
|---|---|---|---|---|
| | | | 0 min | 30 min |
| Glenium® ACE 440* | 0.44 | 0.24 | 131 | 131 |
| 6 | 0.44 | 0.60 | 133 | 100 |
| 2 | 0.44 | 0.32 | 129 | 97 |
| 1 | 0.44 | 0.32 | 127 | 95 |
| Glenium® ACE 440* | 0.42 | 0.24 | 110 | 112 |
| 7 | 0.42 | 0.60 | 114 | 100 |
| 8 | 0.42 | 0.36 | 112 | 105 |
| 10 | 0.42 | 0.44 | 110 | 103 |
| 9 | 0.42 | 0.40 | 108 | 93 |

| | | | | |
|---|---|---|---|---|
| * Glenium® ACE 440 is a polycarboxylate ether with the monomers acrylic acid, maleic acid and ethoxylated hydroxybutyl vinyl ether. It is available from BASF Construction Chemicals Italia Spa. | | | | |

### Concrete tests, including measurement of the plastic viscosity

The cement used for the viscosity measurements was CEM I 52.5 from Montselice and another CEM I 52.5 cement. The following mixture design was used:

| | |
|---|---|
| Sand 0-4 | 1050 kg/m³ |
| Gravel 8-12 | 770 kg/m³ |
| Cement type I 52.5 | 400 kg/m³ |
| Water | 180 kg/m³ |

The ambient temperature was 20°C and the superplasticizers were used in the form of 20% strength solutions, formulated with 4 wt% of defoamer (tributyl phosphate) based on the solids of the superplasticizer.

In order to obtain comparable results, the amount of additive was calculated such that all of the fresh concretes gave a slump of 22 to 24 cm after 5 minutes in accordance with DIN EN 12350. The water/cement ratios were set at 0.45 and the measurement was carried out after 5 minutes and after 20 minutes. The results are summarized in Tables 5a (Monselice cement) and 5b.

Apart from the plasticization, another significant factor for the use as stipulated is the viscosity of the fresh concrete. The viscosity is a measure of the pumpability and processing properties of the fresh concrete. Lower values for the viscosity result in better processing properties and hence in better pumpability (Gleitrohr-Rheometer: Ein Verfahren zur Bestimmung der Fließeigenschaften von Dickstoffen in Rohrleitungen [Sliding pump rheometer: A method to establish the flow properties of viscous media in pipelines], Thesis by Dr Knut Jens Kasten, TU Dresden. Shaker Verlag; 1st edn. (July 2010)). The plastic viscosities of the fresh concrete were measured in an IKAR rheometer (reference: E.P. Koehler, D.W. Fowler (2007). "ICAR Mixture Proportioning Procedure for SCC" International Center for Aggregates Research, Austin, TX.).

**Table 5a: Slump flow and plastic viscosities with Montselice CEM I 52.5 R**

| Copolymer | % by wt. solids copolymer based on cement | Air pore content (%) | Slump (cm) Slump flow(cm) | | Plastic viscosity µ (Pa*s) |
|---|---|---|---|---|---|
| | | | 5 Min | 20 Min | |
| Glenium® ACE 440* | 0.24 | 1.9 | 23 | 23 | 184 |
| | | | 43 | -- | |
| 1 | 0.35 | - | 24 | 23.5 | 151 |
| | | | 52 | 50 | |
| 2 | 0.3 | 1.9 | 22 | 21 | 152 |
| | | | 38 | 35 | |
| 6 | 0.42 | 1.8 | 23 | 23.5 | 147 |
| | | | 54 | 47 | |
| 10 | 0.46 | 2.3 | 21 | 16 | 128 |
| | | | -- | -- | |
| 8 | 0.36 | 2.0 | 23.5 | 23.5 | 140 |
| | | | 46 | 46 | |
| 9 | 0.4 | 2.1 | 24 | 24 | 136 |
| | | | 50 | 47 | |

| | | | | | |
|---|---|---|---|---|---|
| *Glenium®ACE 440 is a polycarboxylate ether with the monomers acrylic acid, maleic acid and ethoxylated hydroxybutyl vinyl ether. It is available from BASF Construction Chemicals Italia Spa. | | | | | |

**Table 5b: Slump flow and plastic viscosities with CEM I 52.5 R**

| Copolymer | % by wt. solids copolymer based on cement | Air pore content (%) | Slump (cm) Slump flow(cm) | | Plastic viscosity µ (Pa*s) |
|---|---|---|---|---|---|
| | | | 5 Min | 20 Min | |
| Glenium® ACE 440* | 0.18 | 2.1 | 23.5 | 19 | 273 |
| | | | 46 | 30 | |
| 1 | 0.33 | 2.4 | 23 | 14 | 170 |
| | | | 37 | -- | |
| 2 | 0.21 | 2.8 | 23.5 | 12 | 187 |
| | | | 43 | -- | |

Commercial superplasticizers are often comb polymers with linear polyethylene glycol side chains (PEG side chains). However, when used as water reducers, these superplasticizers lead to relatively high plastic viscosities on the part of the fresh concrete. This makes it more difficult to pump the fresh concrete and to place it into moulds.
The use of the dispersants plasticizes concretes and makes it possible in particular to obtain low concrete viscosities. As is apparent from the comparison of Glenium® ACE 440 with the copolymers used in the invention they represent a good possibility for preparing fresh concretes having low viscosities even in the case of relatively low w/c values. It is also noted that the viscosity of the concrete without added superplasticizer could not be properly measured, since, because of the lack of plasticity, much higher w/c values would otherwise have to be used here.

## Claims

1. Use of a copolymer for dispersing inorganic binders, the copolymer comprising as comonomers in copolymerized form:
(A) at least one ethylenically unsaturated acid monomer,
(B) at least one ethylenically unsaturated, branched polyether macromonomer of the general formula E-VₖLₖ₊₁, where
E is an ethylenically unsaturated structural unit which comprises at least one ether, carboxylic ester or carboxamide structural unit,
V is a branched structural unit of the formula -CH(CH₂O-)₂, and
L is a linear structural unit of the formula -[A¹O]ₗ-A², where
A¹ in each case independently is selected from C₂-C₁₀ alkylene, C₆-C₁₀ arylene and/or C₇-C₁₀ aralkylene, preferably -C₂H₄-,
A² in each case independently is selected from C₁-C₃₀ alkyl, C₃-C₁₀ cycloalkyl, C₆-C₃o aryl and/or C₇₋C₃₀ aralkyl, preferably C₁-C₄ alkyl,
k is an integer from 1 to 7, preferably from 1 to 3, and
I in each case independently is an integer from 1 to 350, preferably from 2 to 100, more particularly from 5 to 70 and very preferably from 7 to 17.

2. Use according to Claim 1, **characterized in that** the inorganic binder is selected from cements, more particularly portland cements and aluminate cements, from α-calcium sulphate hemihydrate, β-calcium sulphate hemihydrate, anhydrite and lime, from industrial and synthetic slags, more particularly blast furnace slags, slag sand, ground slag sand, electrothermal phosphorus slag and stainless steel slag, from pozzolanic binders, more particularly fly ashes, preferably brown coal fly ash and mineral coal fly ash, microsilica, metakaolin, natural pozzolans, more particularly tuff, trass and volcanic ash, natural and synthetic zeolites, calcined oil shale and mixtures of these.

3. Use according to Claim 1 or 2, **characterized in that** the at least one copolymerized ethylenically unsaturated acid monomer (A) is present in the copolymer in the form of one of the following structural units (la) to (Id): 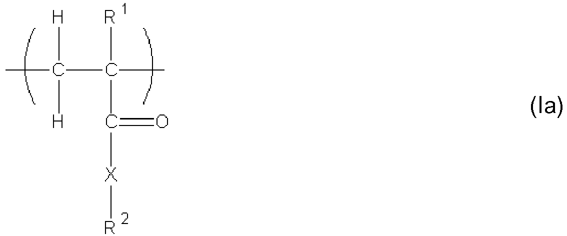 where
R¹ in each case independently is selected from H, an unbranched and/or branched C₁-C₄ alkyl group,
X in each case independently is selected from a single bond, -NH-(CₘH₂ₘ)- and/or -O-(CₘH₂ₘ)-, where m is an integer from 1 to 4,
R² in each case independently is selected from -OM_{1/q}, -SO₃M_{1/q}, -PO₃M_{2/q}, -O-PO₃M_{2/q}, -C₆H₄-SO₃M_{1/q}, -C₆H₄-PO₃M_{2/q} and/or -C₆H₄-OPO₃M_{2/q}, where M is selected from H, alkali metals, alkaline earth metals, aluminium and/or metals of the first transition series, and q represents the charge number of M, with the proviso that R² is represented by -OM_{1/q} if X is a single bond; 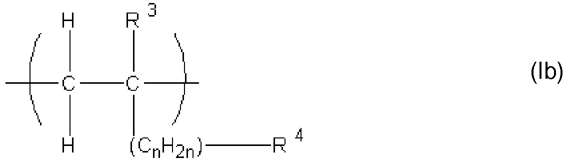
where
R³ has the meaning given above for R¹,
n is an integer from 0 to 4,
R⁴ in each case independently is selected from -SO₃M_{1/q}, -PO₃M_{2/q}, -O-PO₃M_{2/q} and/or -C₆H₄-SO₃M_{1/q}, where M and q have the meanings stated above; 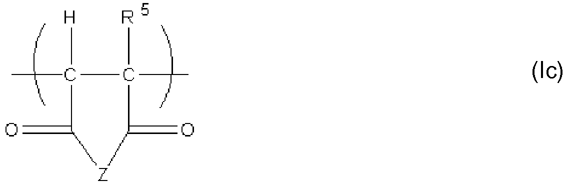
where
R⁵ has the meaning given above for R¹,
Z in each case independently is selected from -O- and/or -NH-; 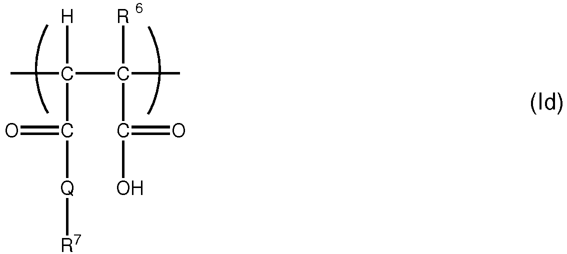
where
R⁶ has the meaning given above for R¹,
Q has the meaning given above for X and,
R⁷ has the meaning given above for R².

4. Use according to Claim 3, **characterized in that** in the formula (la)
R¹ is H or methyl,
X in each case independently is selected from -NH-(CₘH₂ₘ)- and -O-(CₘH₂ₘ)- and preferably is -O-(C₂H₄)- or -NH-(C(CH₃)₂CH₂)-, and
R² is -O-PO₃M_{2/q} or -O-SO₃M_{1/q},
where m, M and q have the meanings given above.

5. Use according to any of Claims 1 to 3, **characterized in that** the acid monomer (A) or the acid monomers (A) is or are selected from (meth)acrylic acid and salts thereof, maleic acid, its monoesters, monoamides and salts, maleic anhydride and/or hydroxyalkyl (meth)acrylic phosphoric esters and salts thereof.

6. Use according to any of Claims 1 to 5, **characterized in that** the copolymer comprises as additional comonomer in copolymerized form an unbranched polyether macromonomer of the general formula E-L where E and L have the meanings given above.

7. Use according to any of Claims 1 to 6, **characterized in that** the structural unit E in each case independently is selected from a vinyl ether, allyl ether, isopreneyl ether, (meth)acrylic ester, (meth)acrylamide, maleic monoester and/or maleic monoamide unit.

8. Use according to any of Claims 1 to 6, **characterized in that** the ethylenically unsaturated structural unit E is present in the form of E*-S, where E* in each case independently is selected from a vinyl ether, allyl ether, (meth)acrylic ester and/or maleic monoester unit and S is a (poly)alkylene glycol unit -[A³O]ₘ-, where A³ in each case independently is selected from C₂-C₁₀ alkylene, C₆-C₁₀ arylene and/or C₇-C₁₀ aralkylene, A³ preferably being -C₂H₄-, and
ₘ is in each case independently an integer from 1 to 50, preferably from 2 to 40, especially preferably from 5 to 25.

9. Use according to any of Claims 1 to 8, **characterized in that**
A¹ in each case independently is present to an extent of more than 60 mol%, based on all of the structural units of the formula -[A¹O]ₗ, in the form of -C₂H₄-,
A² in each case independently is selected from C₁-C₄ alkyl,
k is an integer from 1 to 3 and
I in each case independently is an integer from 2 to 100.

10. Use according to any of Claims 1 to 9, **characterized in that** the branched polyether macromonomer (B) has a molecular weight in the range from 700 to 15 000 g/mol, preferably from 1500 to 10 000 g/mol and more preferably from 3000 to 8000 g/mol.

11. Use according to any of Claims 1 to 10, **characterized in that** the molar ratio of (A) acid monomer to (B) polyether macromonomer is from 20/1 to 1/1, preferably 15/1 to 1.5/1 and more preferably from 10/1 to 3/1.

12. Use according to any of Claims 1 to 11, **characterized in that** the copolymer is obtainable by radical polymerization in the presence of the ethylenically unsaturated acid monomer (A) and of the ethylenically unsaturated polyether macromonomer (B), so that in total at least 45 mol%, preferably at least 80 mol%, of all of the structural units of the copolymer have been produced by copolymerization of acid monomer (A) and polyether macromonomer (B).

13. Building material mixture comprising inorganic binders, preferably cement, and a dispersant for inorganic binders, comprising a copolymer as defined in any of the preceding claims.

## Patentansprüche

1. Verwendung eines Copolymers zum Dispergieren von anorganischen Bindemitteln, wobei das Copolymer als Comonomere einpolymerisiert enthält:
(A) mindestens ein ethylenisch ungesättigtes Säuremonomer,
(B) mindestens ein ethylenisch ungesättigtes, verzweigtes Polyethermakromonomer der allgemeinen Formel E-VₖLₖ₊₁, wobei
E eine ethylenisch ungesättigte Struktureinheit ist, welche mindestens eine Ether-, Carbonsäurester-, oder Carbonsäureamid-Struktureinheit umfasst,
V eine verzweigte Struktureinheit der Formel-CH(CH₂O-)₂ ist, und
L eine lineare Struktureinheit der Formel-[A¹O]ₗ-A² ist, wobei
A¹ jeweils unabhängig aus C₂-C₁₀-Alkylen, C₆-C₁₀-Arylen und/oder C₇-C₁₀-Aralkylen ausgewählt ist, vorzugsweise -C₂H₄-,
A² jeweils unabhängig aus C₁-C₃₀-Alkyl, C₃-C₁₀-Cycloalkyl, C₆-C₃₀-Aryl und/oder C₇-C₃₀-Aralkyl, vorzugsweise C₁-C₄ Alkyl, ausgewählt ist,
k eine ganze Zahl von 1 bis 7, vorzugsweise von 1 bis 3, ist und
l jeweils unabhängig eine ganze Zahl von 1 bis 350, vorzugsweise von 2 bis 100, insbesondere
von 5 bis 70 und besonders bevorzugt von 7 bis 17 ist.

2. Verwendung nach Anspruch 1, **dadurch gekennzeichnet, dass** das anorganische Bindemittel aus Zementen, insbesondere Portlandzementen und Aluminatzementen, aus α-Calciumsulfathemihydrat, β-Calciumsulfathemihydrat, Anhydrit und Kalk, aus industriellen und synthetischen Schlacken, insbesondere Hochofenschlacken, Hüttensand, Hüttensandmehl, elektrothermischer Phosphorschlacke und Edelstahlschlacke, aus puzzolanischen Bindemitteln, insbesondere Flugaschen, vorzugsweise Braunkohleflugasche und Steinkohleflugasche, Mikrosilika, Metakaolin, natürlichen Puzzolanen, insbesondere Tuff, Trass und Vulkanasche, natürlichen und synthetischen Zeolithen, gebranntem Ölschiefer sowie Mischungen davon ausgewählt ist.

3. Verwendung nach Anspruch 1 oder 2, **dadurch gekennzeichnet, dass** das mindestens eine einpolymerisierte ethylenisch ungesättigte Säuremonomer (A) im Copolymer als eine der folgenden Struktureinheiten (Ia) bis (Id) vorliegt: 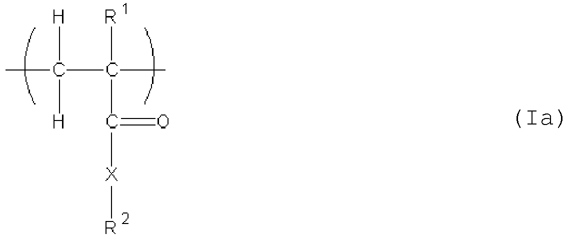 wobei
R¹ jeweils unabhängig aus H, einer unverzweigten und/oder einer verzweigten C₁-C₄-Alkylgruppe ausgewählt ist,
X jeweils unabhängig aus einer Einfachbindung,-NH-(CₘH₂ₘ)- und/oder -O-(CₘH₂ₘ)- ausgewählt ist, wobei m eine ganze Zahl von 1 bis 4 ist,
R² jeweils unabhängig aus -OM_{1/q}, -SO₃M_{1/q}, -PO₃M_{2/q}, -O-PO₃M_{2/q}, -C₆H₄-SO₃M_{1/q}, -C₆H₄-PO₃M_{2/q} und/oder -C₆H₄-OPO₃M_{2/q} ausgewählt ist, wobei M aus H, Alkalimetallen, Erdalkalimetallen, Aluminium und/oder Metallen der ersten Übergangsreihe ausgewählt ist und q die Ladungszahl von M darstellt, mit der Maßgabe, dass R² durch -OM_{1/q} repräsentiert ist, falls X eine Einfachbindung ist; 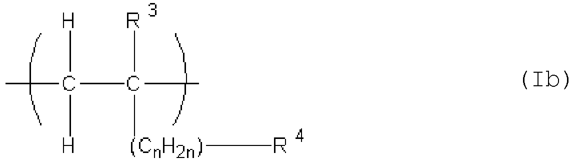
wobei
R³ die vorstehend für R¹ angegebene Bedeutung aufweist,
n eine ganze Zahl von 0 bis 4 ist,
R⁴ jeweils unabhängig aus -SO₃M_{1/q}, -PO₃M_{2/q}, -O-PO₃M_{2/q} und/oder -C₆H₄-SO₃M_{1/q} ausgewählt ist, wobei M und q die vorstehend genannten Bedeutungen aufweisen; 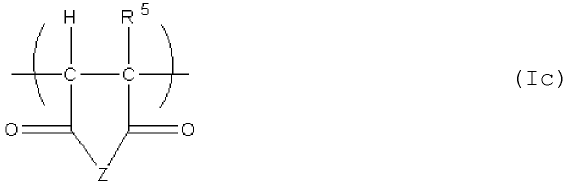
wobei
R⁵ die vorstehend für R¹ angegebene Bedeutung aufweist,
Z jeweils unabhängig aus -0- und/oder -NH-ausgewählt ist; 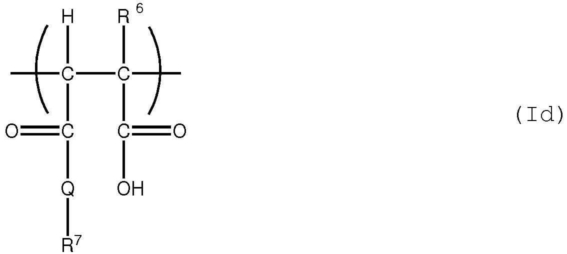
wobei
R⁶ die vorstehend für R¹ angegebene Bedeutung aufweist,
Q die vorstehend für X angegebene Bedeutung aufweist,
R⁷ die vorstehend für R² angegebene Bedeutung aufweist.

4. Verwendung nach Anspruch 3, **dadurch gekennzeichnet, dass** in der Formel (Ia)
R¹ H oder Methyl ist,
X jeweils unabhängig aus -NH-(CₘH₂ₘ)- und -O-(CₘH₂ₘ) - ausgewählt und bevorzugt -O-(C₂H₄)- oder -NH-(C(CH₃)₂CH₂- ist und
R² -O-PO₃M_{2/q} oder -O-SO₃M_{1/q} ist,
wobei m, M und q die vorstehend angegebenen Bedeutungen aufweisen.

5. Verwendung nach einem der Ansprüche 1 bis 3, **dadurch gekennzeichnet, dass** das Säuremonomer (A) oder die Säuremonomere (A) ausgewählt ist oder sind aus (Meth)acrylsäure und deren Salzen, Maleinsäure, deren Halbestern, Halbamiden und Salzen, Maleinsäureanhydrid und/oder Hydroxyalkyl(meth)acrylsäurephosphorsäureestern und deren Salzen.

6. Verwendung nach einem der Ansprüche 1 bis 5, **dadurch gekennzeichnet, dass** das Copolymer als zusätzliches Comonomer ein unverzweigtes Polyethermakromonomer der allgemeinen Formel E-L einpolymerisiert enthält, wobei E und L die vorstehend angegebenen Bedeutungen aufweisen.

7. Verwendung nach einem der Ansprüche 1 bis 6, **dadurch gekennzeichnet, dass** die Struktureinheit E jeweils unabhängig aus einer Vinylether-, Allylether-, Isoprenylether-, (Meth)acrylsäure-ester-, (Meth)acrylsäureamid-, Maleinsäurehalbester- und/oder einer Maleinsäurehalbamid-Einheit ausgewählt ist.

8. Verwendung nach einem der Ansprüche 1 bis 6, **dadurch gekennzeichnet, dass** die ethylenisch ungesättigte Struktureinheit E als E*-S vorliegt, wobei E* jeweils unabhängig aus einer Vinylether-, Allylether-, (Meth)acrylsäureester- und/oder einer Maleinsäurehalbester-Einheit ausgewählt ist und S eine (Poly)alkylenglykoleinheit -[A³O]ₘ- ist, wobei
A³ jeweils unabhängig aus C₂-C₁₀-Alkylen, C₆-C₁₀-Arylen und/oder C₇-C₁₀-Aralkylen ausgewählt ist, vorzugsweise ist A³ -C₂H₄-, und
ₘ ist jeweils unabhängig eine ganze Zahl von 1 bis 50, bevorzugt von 2 bis 40, insbesondere bevorzugt von 5 bis 25.

9. Verwendung nach einem der Ansprüche 1 bis 8, **dadurch gekennzeichnet, dass**
A¹ jeweils unabhängig zu mehr als 60 Mol-% bezogen auf alle Struktureinheiten der Formel-[A¹O]ₗ als -C₂H₄- vorliegt,
A² jeweils unabhängig aus C₁-C₄-Alkyl ausgewählt ist,
k eine ganze Zahl von 1 bis 3 ist und
l jeweils unabhängig eine ganze Zahl von 2 bis 100 ist.

10. Verwendung nach einem der Ansprüche 1 bis 9, **dadurch gekennzeichnet, dass** das verzweigte Polyethermakromonomer (B) ein Molekulargewicht im Bereich von 700 bis 15.000 g/mol, bevorzugt von 1.500 bis 10.000 g/mol und besonders bevorzugt von 3.000 bis 8.000 g/mol aufweist.

11. Verwendung nach einem der Ansprüche 1 bis 10, **dadurch gekennzeichnet, dass** das molare Verhältnis von (A) Säuremonomer zu (B) Polyethermakromonomer von 20/1 bis 1/1 beträgt, bevorzugt 15/1 bis 1,5/1 und besonders bevorzugt von 10/1 bis 3/1.

12. Verwendung nach einem der Ansprüche 1 bis 11, **dadurch gekennzeichnet, dass** das Copolymer durch radikalische Polymerisation in Anwesenheit des ethylenisch ungesättigten Säuremonomers (A) und des ethylenisch ungesättigten Polyethermakromonomers (B) erhältlich ist, so dass insgesamt mindestens 45 Mol-%, bevorzugt mindestens 80 Mol-% aller Struktureinheiten des Copolymers durch Einpolymerisation von Säuremonomer (A) und Polyethermakromonomer (B) erzeugt wurden.

13. Baustoffmischung enthaltend anorganische Bindemittel, bevorzugt Zement, und ein Dispergiermittel für anorganische Bindemittel, umfassend ein Copolymer gemäß der Definition eines der vorstehenden Ansprüche.

## Revendications

1. Utilisation d'un copolymère pour la dispersion de liants inorganiques, le copolymère comprenant en tant que comonomères sous forme copolymérisée :
(A) au moins un monomère acide à insaturation éthylénique,
(B) au moins un macromonomère polyéther ramifié à insaturation éthylénique représenté par la formule générale E-VₖLₖ₊₁, où
E est un motif de structure à insaturation éthylénique qui comprend au moins un motif de structure éther, ester carboxylique ou carboxamide,
V est un motif de structure ramifié représenté par la formule -CH(CH₂O-)₂ et
L est un motif de structure linéaire représenté par la formule -[A¹O]ₗ-A², où
A¹ dans chaque cas indépendamment est choisi parmi les groupes alkylène en C₂-C₁₀, arylène en C₆-C₁₀ et/ou aralkylène en C₇-C₁₀, de préférence -C₂H₄-,
A² dans chaque cas indépendamment est choisi parmi les groupes alkyle en C₁-C₃₀, cycloalkyle en C₃-C₁₀, aryle en C₆-C₃₀ et/ou aralkyle en C₇-C₃₀, de préférence alkyle en C₁-C₄,
k est un nombre entier de 1 à 7, de préférence de 1 à 3, et
1 dans chaque cas indépendamment est un nombre entier de 1 à 350, de préférence de 2 à 100, plus particulièrement de 5 à 70 et tout préférablement de 7 à 17.

2. Utilisation selon la revendication 1, **caractérisée en ce que** le liant inorganique est choisi parmi les ciments, plus particulièrement les ciments Portland et les ciments d'aluminate, parmi le sulfate de calcium α hémihydraté, le sulfate de calcium β hémihydraté, l'anhydrite et la chaux, parmi les laitiers industriels et synthétiques, plus particulièrement les laitiers de haut fourneau, le sable de laitier, le sable de laitier concassé, le laitier issu de la production électrothermique de phosphore et le laitier issu de la production d'acier inoxydable, parmi les liants pouzzolaniques, plus particulièrement les cendres volantes, de préférence la cendre volante de lignite et la cendre volante de charbon minéral, la microsilice, le métakaolin, les pouzzolanes naturelles, plus particulièrement le tuf, le trass et la cendre volcanique, les zéolites naturelles et synthétiques, le schiste bitumineux calciné et les mélanges de ceux-ci.

3. Utilisation selon la revendication 1 ou 2, **caractérisée en ce que** l'au moins un monomère acide à insaturation éthylénique copolymérisé (A) est présent dans le copolymère sous la forme de l'un des motifs de structure (Ia) à (Id) suivantes : 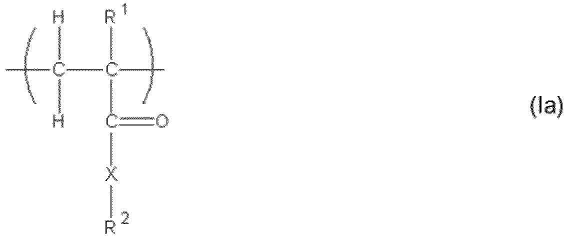 où
R¹ dans chaque cas indépendamment est choisi parmi H, un groupe alkyle en C₁-C₄ non ramifié et/ou ramifié,
X dans chaque cas indépendamment est choisi parmi une liaison simple, -NH-(CₘH₂ₘ)- et/ou -O-(CₘH₂ₘ)-, où m est un nombre entier de 1 à 4,
R² dans chaque cas indépendamment est choisi parmi -OM₁/_{q} -SO₃M_{1/q}, -PO₃M_{2/q}, -O-PO₃M_{2/q,} -C₆H₄-SO₃M_{1/q}, -C₆H₄-PO₃M_{2/q} et/ou -C₆H₄-OPO₃M_{2/q}, où M est choisi parmi H, les métaux alcalins, les métaux alcalinoterreux, l'aluminium et/ou les métaux de la première série de métaux de transition et q représente la charge de M, à condition que R² soit représenté par -OM_{1/}q si X est une simple liaison ; 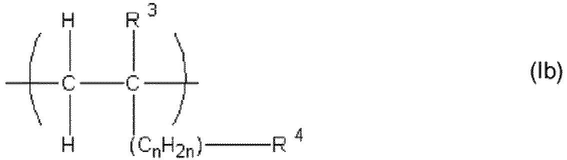
où
R³ a la signification donnée ci-dessus pour R¹,
n est un nombre entier de 0 à 4,
R⁴ dans chaque cas indépendamment est choisi parmi -SO₃M_{1/q}, -PO₃M_{2/q}, -O-PO₃M_{2/q} et/ou -C₆H₄-SO₃M_{1/q}, où M et q ont les significations indiquées ci-dessus ; 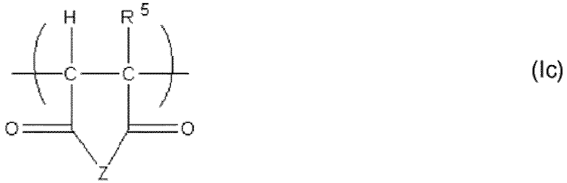
où
R⁵ a la signification donnée ci-dessus pour R¹,
Z dans chaque cas indépendamment est choisi parmi -O- et/ou -NH- ; 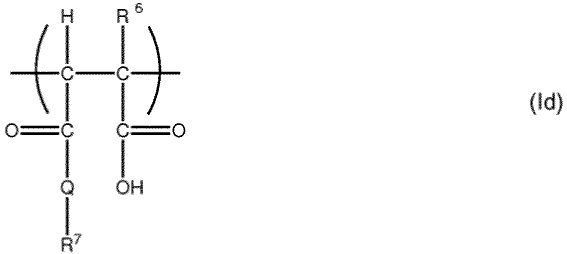
où
R⁶ a la signification donnée ci-dessus pour R¹,
Q a la signification donnée ci-dessus pour X et
R⁷ a la signification donnée ci-dessus pour R².

4. Utilisation selon la revendication 3, **caractérisée en ce que** dans la formule (Ia)
R¹ est H ou un groupe méthyle,
X dans chaque cas indépendamment est choisi parmi -NH-(CₘH₂ₘ) - et -O-(CₘH₂ₘ)- et de préférence est -O-(CH₄)-ou -NH-(C(CH₃)₂CH₂)- et
R² est -O-PO₃M_{2/q} ou -O-SO₃M_{1/q},
où m, M et q ont les significations données ci-dessus.

5. Utilisation selon l'une quelconque des revendications 1 à 3, **caractérisée en ce que** le ou les monomères acides (A) sont choisis parmi l'acide (méth)acrylique et les sels de celui-ci, l'acide maléique, ses monoesters, monoamides et sels, l'anhydride maléique et/ou les esters hydroxyalkyliques (méth)acryliques phosphoriques et les sels de ceux-ci.

6. Utilisation selon l'une quelconque des revendications 1 à 5, **caractérisée en ce que** le copolymère comprend en tant que comonomère supplémentaire sous forme copolymérisée un macromonomère polyéther non ramifié représenté par la formule générale E-L où E et L ont les significations données ci-dessus.

7. Utilisation selon l'une quelconque des revendications 1 à 6, **caractérisée en ce que** le motif de structure E dans chaque cas indépendamment est choisi parmi un motif éther de vinyle, éther d'allyle, éther d'isoprényle, ester (méth)acrylique, (méth)acrylamide, monoester maléique et/ou monoamide maléique.

8. Utilisation selon l'une quelconque des revendications 1 à 6, **caractérisée en ce que** le motif de structure à insaturation éthylénique E est présent sous la forme de E*-S, où E* dans chaque cas indépendamment est choisi parmi un motif éther de vinyle, éther d'allyle, ester (méth)acrylique et/ou monoester maléique et S est un motif (poly)alkylèneglycol -[A³O]ₘ-, où A³ dans chaque cas indépendamment est choisi parmi les groupes alkylène en C₂-C₁₀, arylène en C₆-C₁₀ et/ou aralkylène en C₇-C₁₀, A³ étant de préférence -C₂H₄-, et
m est dans chaque cas indépendamment un nombre entier de 1 à 50, de préférence de 2 à 40, particulièrement préférablement de 5 à 25.

9. Utilisation selon l'une quelconque des revendications 1 à 8, **caractérisée en ce que**
A¹ dans chaque cas indépendamment est présent à une hauteur supérieure à 60 mol%, par rapport à la totalité des motifs de structure représentés par la formule -[A¹O]ₗ, sous la forme de -C₂H₄-,
A² dans chaque cas indépendamment est choisi parmi les groupes alkyle en C₁-C₄,
k est un nombre entier de 1 à 3 et
1 dans chaque cas indépendamment est un nombre entier de 2 à 100.

10. Utilisation selon l'une quelconque des revendications 1 à 9, **caractérisée en ce que** le macromonomère polyéther ramifié (B) a une masse moléculaire dans la plage de 700 à 15 000 g/mol, de préférence de 1 500 à 10 000 g/mol et de préférence encore de 3 000 à 8 000 g/mol.

11. Utilisation selon l'une quelconque des revendications 1 à 10, **caractérisée en ce que** le rapport molaire du monomère acide (A) au macromonomère polyéther (B) est de 20/1 à 1/1, de préférence de 15/1 à 1,5/1 et de préférence encore de 10/1 à 3/1.

12. Utilisation selon l'une quelconque des revendications 1 à 11, **caractérisée en ce que** le copolymère peut être obtenu par polymérisation radicalaire en présence du monomère acide à insaturation éthylénique (A) et du macromonomère polyéther à insaturation éthylénique (B), de sorte qu'au total au moins 45 mol%, de préférence au moins 80 mol%, de la totalité des motifs de structure du copolymère aient été produits par copolymérisation de monomère acide (A) et de macromonomère polyéther (B).

13. Mélange pour matériau de construction comprenant des liants inorganiques, de préférence du ciment, et un dispersant pour des liants inorganiques, comprenant un copolymère tel que défini dans l'une quelconque des revendications précédentes.
